# EUROPÄISCHE PATENTANMELDUNG

(11) **EP 0 860 474 A1**
(43) Veröffentlichungstag der Anmeldung: **26.08.1998**
(21) Anmeldenummer: 98102658.6
(22) Anmeldetag: 17.02.1998
(51) Int. Cl.: C08L 101/00, C08L 21/00, C08L 23/04, C08L 23/10, C08L 25/04, C08L 75/04

(54) **Material zur Herstellung von Baumaterialien, insbesondere in Plattenform**

(30) Priorität: 21.02.1997 DE 29703078 U
(71) Anmelder: Roweform Kunststoffe GmbH & Co. KG, 55776 Ruschberg, Heimelberg (DE)
(72) Erfinder: Heinrich, Rolf, 66969Glashütte (DE)
(74) Vertreter: Ratzel, Gerhard, Dr.

(57) **Zusammenfassung**

Die Erfindung betrifft ein Material zur Herstellung von von Baumaterialien und Formkörpern sowie Baumaterialien und Formkörper daraus,wobei diese aus einem Schmelzgemisch aus thermoplastischem Material und Gummimaterial besteht.Das Gummimaterial ist vorzugsweise Gummi-Rauhmehl,das thermoplastische Material ist vorzugsweise von mehlartiger Beschaffenheit.Vorzugsweise besteht das Material aus einer Platte oder einer Unterspannbahn.

## Beschreibung

Die vorliegende Erfindung betrifft Baumaterialien, insbesondere in Plattenform, die aus einem Gemisch von thermoplastischen Material und Gummimaterial gegebenenfalls unter Zumischung von Füllstoffen und/oder eingelegten Materialien bestehen, wobei das Gummimaterial und das thermoplastische Material in Gestalt einzelner Artikel mechanisch und/oder durch Einwirkung von Hitze und/oder durch Einwirkung von Druck und /oder durch Einwirkung von Strahlung miteinander verbunden sind.

Eine bevorzugte Herstellungsweise besteht darin, daß die Ausgangsmaterialien in Granalienform mechanisch gemischt und sodann in eine Extrusionsvorrichtung zur gewünschten Raumform, beispielsweise in Plattenform, gebracht werden.

Als Ausgangssubstanz für das Gummimaterial eignet sich insbesondere Gummi-Rauhmehl.

Als Ausgangsmaterial für den thermoplastischen Inhaltsstoff eignet sich insbesondere Polyäthylen in Pulverform, wobei dieses Polyäthylen vorzugsweise aus Altpolyäthylen aus der Recyclisierung beispielsweise von Polyäthylen-Flaschenverschlüssen besteht.

Zum nächstkommenden Stand der Technik ist die deutsche Patentschrift 21 59 735 aus dem Jahr 1976 zu nennen, die die Verwendung von aus Altreifen durch Mahlen hergestelltem Gummi- und/oder Rauhmehl zur Herstellung von Ionenaustauschern beschreibt.

Ferner ist auf die deutsche Auslegeschrift 1086437 hinzuweisen, die ein Verfahren zur Herstellung von anionenselektiven Membranen beschreibt, gemäß dem man ein Mischpolymerisat von 25 bis 70 Prozent einer aromatischen Monovinylverbindung und einer aliphatischen konjugierten Dien-Verbindung in an sich bekannter Weise zu einer filmartigen Membran ausformt, diese Membran durch Cyclisieren oder vulkanisieren unlöslich macht und so dann chlorakyliert und schließlich aminiert.

In der Patentschrift 21 59 735 ist ausgeführt, daß bei dem Verfahren gemäß deutscher Auslegeschrift 1086437 von einem definierten Körper, nämlich einem bestimmten Mischpolymerisat aus aromatischen und aliphatischen Anteilen ausgegangen wird, während gemäß deutscher Patentschrift 21 59 735 das Gummimehl und/oder Rauhmehl ein rußgefülltes Vulkanisat darstellt. In der Patentschrift 21 59 735 ist sodann ausgeführt, daß ein weiterer Unterschied zum Stand der Technik gemäß deutscher Auslegeschrift 1086437 darin besteht, daß bei letzterer Membranen hergestellt werden, während beim Gegenstand des Patents 21 59 735 keine bestimmte Raumform erzielt wird.

Insoweit d.h. bezüglich der Definition des Inhaltsstoffs Gummimehl und/oder Rauhmehl wird bezüglich folgender Offenbarung von den Definitionen in der deutschen Patentschrift 21 59 735 Gebrauch gemacht.

Auch der weitere in der deutschen Patentschrift 21 59 735 beschriebene Stand der Technik gilt sinngemäß auch als Stand der Technik hinsichtlich des Gegenstands vorliegende Erfindung.

Vorliegende Erfindung liegt die überraschende Erkenntnis zu Grunde, daß ein Gemisch aus Gummi- und/oder Raumehl und pulverförmigen und/oder aus Einzelpartikeln bestehenden thermoplastischen Kunststoff, gegebenenfalls mit an sich bekannten mit diesen Ausgangsmaterialien verträglichen Füllstoffen oder eingelegten Stoffen, beispielsweise Glasfilamenten und/oder Metallfilamenten sich hervorragend dazu eignet auf die oben beschriebene Weise zu Baumaterialien verformt zu werden, beispielsweise durch Extrusion, insbesondere Extrusion bei erhöhten Temperaturen zu Plattenelementen verarbeitet zu werden.

Aus den erfindungsgemäßen Materialien lassen sich insbesondere Platten zur Bedeckung von Dächern mit besonders günstigen chemischen und physikalischen Kenndaten und Eigenschaften herstellen. Diese Platten sind von hoher Verwitterungsfestigkeit, hoher Temperaturresistenz - beispielsweise konnte bei Versuchsdächern festgestellt werden, daß diese bei Bedeckung mit den erfindungsgemäßen Platten Temperaturen zwischen -20°C und +80°C ohne jede Beschädigung überstehen.

Ein weiterer Vorteil der erfindungsgemäßen Platten liegt in ihrer Schwerstentflammbarkeit.

Aus den erfindungsgemäßen Platten und den sonstigen Raumformen hergestellt aus dem erfindungsgemäßen Material lassen sich auf ansich bekannte Weise auch Estriche und Schalliosolationen bzw Schallisolationselemente herstellen.

Die erfindungsgemäße Mischung kann hinsichtlich ihrer Weiterverarbeitbarkeit auch als Schmelzmischung wirken.

Weitere Anwendungsweisen für die erfindungsgemäßen Materialien sind Isolierplatten in jeglicher Ausmessung und Dicke und Unterspannbahnen für Dächer.

Als thermoplastischer Inhaltsstoff der erfindungsgemäßen Materialmischung sind außer Polyäthylen beispielsweise zu nennen: Polypropylene, thermoplastische Polyurethane und Polyvinylverbindungen.

Die Bruchdehnung der aus dem erfindungsgemäßem Material hergestellten plattenförmigen Materialien liegt im Bereich von 190 bis 200.

Die Dichte liegt vorzugsweise im Bereich zwischen 1,2 und 1,3

Die Härte liegt vorzugsweise im Bereich zwischen: 90 und 100 , Shore A - Härte

Gegebenenfalls kann das erfindungsgemäße Material Zusatzstoffe bzw Füllstoffe enthalten, beispielsweise geschlossenzellige und/oder offenzellige Schaumstoffgranulate, beispielsweise Polystyrolgranulate.

Es können ferner Filamente eingearbeitet sein, beispielsweise Glasfilamente und/oder Metallfilamente, und/oder Kohlefasern.

Zur Aufhellung können beispielsweise auch Pigmentstoffe, beispielsweise Titandioxid, eingemischt sein.

Mit den erfindungsgemäßen Materialien wurden ferner Bestrahlungstests durchgeführt, wobei sich erwiesen hat, daß diese beispielsweise auch eine optimale Beständigkeit gegenüber Ultraviolett-Strahlung aufweisen.

Das Wesen vorliegender Erfindung wird nun anhand des folgenden Ausführungsbeispiels weiterhin erläutert.

### Ausführungsbeispiel

25 Kilogramm Polyäthylenpulver einer Partikelgröße (Korngröße) von 3 mm und 20 Kilo- gramm Gummi- Rauhmehl einer Partikelgröße (Korngröße) von 1 mm werden bei einer Temparatur von 180°C 10 Minuten verrührt.

Gegebenenfalls werden für thermoplastische Mischungen bzw Granulate an sich bekannte Additive zugegeben.

Ein Teil des Mischerinhalts wirdso dann auf an sich bekannte Weise regranuliert; das entstandene Granulat ist als Handelsprodukt vorgesehen.

Der verbleibende Anteil des entstandenen Gemischs wird auf sich an sich bekannte Weise zum Extruder abgesaugt und zu plattenförmigem Baumaterial extrudiert.

Auf diese Weise werden schalldämmende Plattenmaterialien hergestellt, die im Temperatur- bereich von -20°C bis +85°C temperaturbeständig sind. Sie sind ferner schalldämmend, wasserdicht, abriebfest und bruchsicher.

Dieses erfindungsgemäße Material wird zu Dachplatten als Ziegelersatz, zu Schuhsohlen, zu Gipsbechern und zu Elefantenhaut, nämlich zu Dickbahnen bis etwa 5 mm Dicke verarbeitet.

Diese Verarbeitung und Bearbeitung der erfindungsgemäßen Platten kann auf jede an sich bekannte mechanische Weise erfolgen, beispielsweise durch Schneiden und Hobeln, es ist eine thermische Veformung leicht möglich - das Material läßt sich leicht Schweißen.

Als thermoplastische Komponente neben dem Gummimehl bzw Rauhmehl eignen sich insbesondere Polyäthylen, Polypropylene, Polyurethane und Polyvinylverbindungen, beispielsweise Polystyrol.

Das erfindungsgemässe Material liegt bereits vor der Weiterverarbeitung gegebenenfalls in Plattenform vor.

Die Verbindung der Inhaltsstoffe erfolgt vorzugsweise über van der Waalsche Bindungen, ausgelöst durch Druck (Anschmelzungsdruck) und/oder Temperatur und/oder Strahlung, sodass ein sog. Schmelzgemisch vorliegt.

Vorzugsweise liegt also sowohl das Gummimaterial als auch das thermoplastische Material im Erfindungsgegenstand in Pulverform vor.

Im folgenden werden beispielhaft die physikalischen Messdaten einer erfindungsgemässen Platte,die durch Schmelzextrusion eines pulverförmigen Gemische aus thermoplastischem und aus Gummi - Material und anschliessender Abkühlung,herstellt wurde,angegeben:
1. Dichte, Norm DIN 53479 beträgt 1,23 g / cm³
2. Schlagbiegefestigkeit , Vorspritzung bei 220° C und 250 Bar , Norm: Charpy - Anordnung , Ergebnis : kein Bruch
3. Kerbschlagbiegefestigkeit in der Kälte bei -40° C Herstellungs-und Prüfbedingungen wie bei der Schlagbiegefestigkeit , Ergebnis : kein Bruch
4. Kerbschlagbiegefestigkeit bei normaler Temperatur , Bedingungen der Herstellung und Prüfung wie bei Ziffer 3 U - Kerbe , Ergebnis : kein Bruch
5. Zugfestigkeit , Bedingungen bei der Herstellung und Prüfung wie bei Ziffer 2 , Prüf-Norm DIN 53455 / 3 / 3 Ergebnis : Die Zugfestigkeit beträgt 8,7 MPa
6. Reißdehnung , Herstellungs- und Prüfbedingungen wie Ziffer 5 DIN 53455 / 3 / 3 Ergebnis : Die Reissdehnung ist grösser als 100
7. Shore A Härte : 95

## Patentansprüche

1. Material zur Herstellung von Baumaterialien und Formkörpern sowie Baumaterialien und Formkörper daraus,
dadurch gekennzeichnet,
dass dieses aus einem Schmelzgemisch aus thermoplastischem Material und Gummimaterial,besteht.

2. Material nach Anspruch 1,
dadurch gekennzeichnet,
dass das Gummimaterial und das thermoplastische Material in Gestalt einzelner Partikel mechanisch und/oder durch Einwirkung von Hitze und oder durch Einwirkung von Strahlung miteinander verbunden sind.

3. Material nach Ansprüchen 1 oder 2,
dadurch gekennzeichnet,dass das Gummimaterial aus Gummi-Rauhmehl besteht und/oder dass das thermoplastische Material von mehlartiger Beschaffenheit ist.

4. Material nach Ansprüchen 1 - 3 ,
dadurch gekennzeichnet,dass es Füllstoffe enthält.

5. Material nach Anspruch 4 ,
dadurch gekennzeichnet,dass die Füllstoffe aus offenzelligen und/oder geschlossenzelligen Schaumstoffen und/oder Filamenten bestehen

6. Material nach Ansprüchen 1 - 5 , dadurch gekennzeichnet, dass es in Plattenform vorliegt

7. Platte,dadurch gekennzeichnet,dass sie aus einem physikalischen Verbund von thermoplastischem Material und Gummimaterial besteht

8. Unterspannbahnen,dadurch gekennzeichnet,dass sie aus einem physikalischen Verbund von thermoplastischem Material und Gummimaterial bestehen.

9. Platte nach Anspruch 7 , dadurch gekennzeichnet,dass sie Füllstoffe, insbesondere geblähte Füllstoffe,enthält.

10. Unterspannbahn nach Anspruch 8 ,dadurch gekennzeichnet,dass sie Füllstoffe,insbesondere geblähte Füllstoffe,enthält.

11. Material nach Anspruch 2 , dadurch gekennzeichnet,dass die Verbindung durch Schmelzextrusion zustande gekommen ist.

12. Platte nach Anspruch 7 , dadurch gekennzeichnet,dass sie durch Schmelzextrusion zustande gekommen ist.

13. Unterspannbahn nach Anspruch 8, dadurch gekennzeichnet , dass sie durch Schmelzextrusion zustande gekommen ist.
